# FASCICULE DE BREVET EUROPEEN

(11) **EP 1 046 933 B1**
(45) Date de publication et mention de la délivrance du brevet: **10.09.2003**
(21) Numéro de dépôt: 99107887.4
(22) Date de dépôt: 21.04.1999
(51) Int. Cl.: G02B 5/20, G02B 1/10

(54) **Dispositif optique à gradient d'absorption et à filtrage spectral sélectif ainsi qu'objectif et appareil de prise d'images munis d'un tel dispositif**
Optische Vorrichtung mit Absorptionsgradient und selektiver spektraler Filtrierung, und Objektiv und Kamera mit dieser Vorrichtung
Optical device with absorption gradient and selective spectral filtering, and objective and camera comprising the same

(43) Date de publication de la demande: 25.10.2000
(73) Titulaire: ASULAB S.A., CH-2501 Bienne (CH)
(72) Inventeur: Buczek, Harthmuth, 2074 Marin (CH); Grupp, Joachim, 2003 Neuchâtel (CH)
(74) Mandataire: Ravenel, Thierry Gérard Louis

(56) Documents cités:
- FR-A- 2 623 293
- PATENT ABSTRACTS OF JAPAN vol. 007, no. 096 (P-193), 22 avril 1983 (1983-04-22) & JP 58 023010 A (NIPPON DENKI KK), 10 février 1983 (1983-02-10)
- PATENT ABSTRACTS OF JAPAN vol. 017, no. 626 (P-1647), 18 novembre 1993 (1993-11-18) & JP 05 203884 A (TOSHIBA CORP), 13 août 1993 (1993-08-13)

## Description

La présente invention concerne un dispositif optique à gradient d'absorption destiné à assurer un éclairement homogène dans le plan image d'un objectif. L'invention concerne également un tel dispositif optique formant filtre spectral destiné à filtrer de manière sélective des bandes spectrales parmi le spectre optique total traversant ledit dispositif optique. L'invention concerne enfin un objectif ainsi qu'un appareil de prise d'images munis d'un dispositif optique du genre susmentionné.

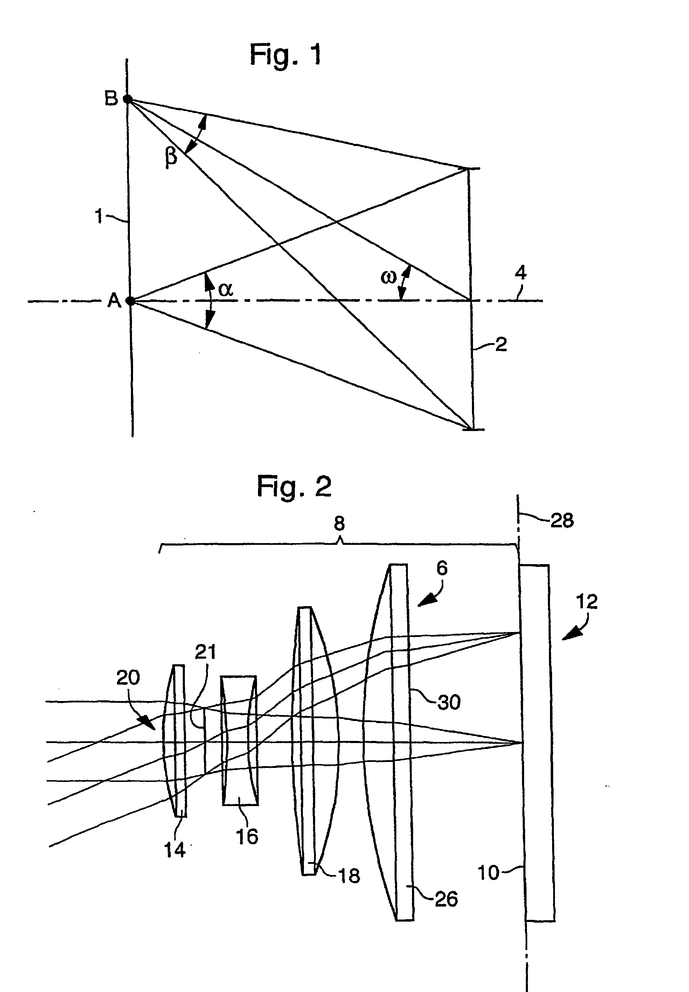

La réalisation d'un objectif de bonne qualité pour un appareil de prise d'images numérique exige l'incorporation d'un filtre spectral pour éliminer le rouge et l'infrarouge auxquels les capteurs optiques du type à semi-conducteurs qui équipent ces appareils sont très sensibles. Elle exige également l'incorporation d'un filtre à gradient d'absorption pour homogénéiser l'éclairement dans le plan image de l'objectif. En effet, les objectifs pour appareils de prise d'images actuellement disponibles sur le marché présentent souvent un problème d'uniformité de l'éclairement dans leur plan image, ce qui se traduit par une diminution sensible de l'éclairement du centre du plan image vers les bords de celui-ci. Ce problème est lié au fait que les lentilles qui composent ces objectifs sont le plus souvent des lentilles sphériques. De telles lentilles sont couramment utilisées en raison de leur simplicité de fabrication par meulage et polissage à l'aide de poudres abrasives. Malheureusement, ces lentilles sont les plus défavorables du point de vue de l'éclairement comme il va être expliqué en référence à la figure 1 annexée à la présente demande.

On a représenté à la figure 1 mentionnée ci-dessus deux points désignés respectivement par les références alphabétiques A et B. Ces deux points A et B se trouvent dans le plan image 1 d'une lentille sphérique 2. Comme il ressort de la figure 1, le point A se trouve situé sur l'axe optique 4 de la lentille 2, tandis que le point B est situé à distance de cet axe 4. On appelle respectivement α et β le facteur de projection ou ouverture utile de la lentille 2 pour les points A et B. On constate que l'ouverture utile devient plus petite pour un point qui est situé hors axe, autrement dit β < α. Par conséquent, l'éclairement, c'est-à-dire l'énergie par unité de surface, diminue pour un point situé hors axe. Ceci est confirmé par le fait que l'éclairement E varie selon la relation E = E₀cos⁴ω, où E₀ est l'éclairement incident et ω est l'angle entre l'axe optique et la droite reliant un point du plan image au centre de la lentille. Ainsi, pour un point situé sur l'axe optique, ω = 0 et E = E₀ est maximum. Par contre, pour un point situé hors de l'axe optique, l'angle ω augmente et l'éclairement E résultant diminue.

Afin de tenter de compenser les effets défavorables des lentilles sphériques du point de vue de l'éclairement, plusieurs solutions peuvent être envisagées. L'une de ces solutions consiste à utiliser des lentilles asphériques ou des combinaisons d'un grand nombre de lentilles sphériques. Une autre solution connue consiste à utiliser un filtre à gradient d'absorption. Un tel filtre se présente généralement sous la forme d'un substrat sensiblement plan disposé dans ou à proximité du plan image proprement dit ou d'un plan image intermédiaire. Selon une première variante de réalisation, l'une des faces du substrat est revêtue d'une couche mince d'un matériau réfléchissant tel que de l'aluminium. Cette couche présente la particularité d'être plus épaisse, et donc plus réfléchissante, en son centre que dans sa zone périphérique. Elle permet ainsi d'homogénéiser l'éclairement dans le plan image de l'objectif en réduisant l'éclairement au centre du plan image, tandis qu'elle laisse passer davantage de lumière sur les bords dudit plan image. Selon une autre variante de réalisation, le filtre à gradient d'absorption est réalisé en un matériau teinté dans la masse dont la densité optique décroît du centre vers les bords du filtre. D'autres filtres à gradient d'absorption plus complexes encore peuvent également être utilisés.

Les mesures de correction qui viennent d'être décrites ont pour inconvénient d'être coûteuses. En particulier, le montage de l'objectif doit être effectué dans un environnement propre tel qu'une salle blanche, et les filtres doivent être encapsulés afin d'être protégés contre les poussières, ce qui représente des coûts élevés. Par ailleurs, l'intégration de deux éléments supplémentaires dans le chemin optique des objectifs empêche la réalisation d'objectifs miniaturisés et compacts. Enfin, loin de l'axe optique de l'objectif, l'angle que forme la lumière incidente avec la surface du filtre à gradient d'absorption augmente, ce qui entraîne une augmentation de la quantité de lumière réfléchie par la surface dudit filtre, et donc une diminution de la luminosité qui arrive sur le capteur optique qui équipe les appareils de prise d'images numériques.

Un dispositif de compensation est également connu de GB-A-2 099 177.

La présente invention a pour but de remédier aux problèmes et inconvénients ci-dessus en proposant un dispositif optique permettant de combiner dans un même élément les fonctions de filtre spectral et de filtre à gradient d'absorption.

A cet effet, la présente invention concerne un dispositif optique destiné à homogénéiser l'éclairement dans un plan image, caractérisé en ce qu'il est formé d'un bloc de matériau homogène transparent filtrant, ce bloc possédant un coefficient d'absorption sensiblement uniforme pour l'ensemble des longueurs d'onde du spectre optique visible qui le traversent, et présentant une épaisseur variable adaptée à un profil d'absorption déterminé, ce profil d'absorption permettant l'homogénéisation de l'éclairement dudit plan image.

Grâce à ces caractéristiques, la présente invention procure un dispositif optique dont l'épaisseur, convenablement choisie, produit une absorption graduelle permettant d'obtenir une luminosité uniforme dans le plan image de l'objectif équipé d'un tel dispositif. Comparé aux filtres à gradient d'absorption de l'art antérieur, le dispositif selon l'invention, grâce à sa structure monolithique, est simple et peu coûteux à fabriquer. Il est de plus peu encombrant, de sorte qu'il peut être facilement intégré dans l'objectif.

Selon une caractéristique complémentaire de l'invention, le bloc de matériau transparent filtrant constitue une lentille.

Selon une autre caractéristique de l'invention, le dispositif optique présente un coefficient d'absorption de forte valeur pour des longueurs d'onde comprises dans une bande spectrale déterminée.

Ainsi, contrairement à l'art antérieur où la réalisation d'un objectif de bonne qualité pour un appareil de prise d'images numérique nécessitait le montage dans le chemin optique dudit objectif d'un filtre à gradient d'absorption, d'un filtre spectral et d'une lentille, la présente invention permet de réunir en un même élément optique les fonctions de ces deux filtres et de la lentille. Ceci permet de limiter le prix de revient de l'objectif, d'une part en réduisant le nombre de pièces nécessaires à son montage, et d'autre part en simplifiant la fabrication, car seul l'espace séparant le dispositif optique selon l'invention du capteur d'images doit être encapsulé afin de garantir une protection efficace contre les poussières.

La présente invention concerne également un objectif photographique comprenant un dispositif optique du genre susmentionné, ainsi qu'un appareil de prise d'images muni d'un tel objectif.

D'autres caractéristiques et avantages de la présente invention apparaîtront plus clairement à la lecture de la description détaillée qui suit d'un exemple de réalisation du dispositif optique selon l'invention, cet exemple étant donné à titre purement illustratif et non limitatif, en liaison avec les dessins annexés dans lesquels :
- la figure 1, déjà citée, est une représentation schématique d'une lentille sphérique et de son plan image associé;
- la figure 2 est une vue schématique du dispositif optique selon l'invention;
- la figure 3 est une représentation graphique du taux de transmission de la lumière d'un matériau filtrant neutre;
- la figure 4 est une représentation graphique du taux de transmission de la lumière d'un matériau absorbant fortement le rayonnement infrarouge, et
- la figure 5 est une représentation graphique du taux de transmission de la lumière d'un matériau absorbant fortement le rayonnement ultraviolet.

Un exemple préféré d'application du dispositif optique selon l'invention se rapporte aux appareils photographiques numériques. Grâce à la présente invention, il est possible d'offrir à l'utilisateur un objectif peu coûteux et peu encombrant, tout en garantissant un éclairement homogène dans le plan image dudit objectif, ainsi qu'un filtrage spectral sélectif permettant d'éliminer les longueurs d'onde situées dans la bande spectrale infrarouge auxquelles les capteurs optiques à semi-conducteurs qui équipent ce type d'appareils photographiques sont très sensibles. Il va néanmoins de sol que le présent dispositif pourra être appliqué de manière analogue à tout autre système optique tel que, par exemple, un appareil photographique classique muni d'une pellicule photosensible, dans lequel il est également nécessaire d'homogénéiser l'éclairement, et dans lequel on peut prévoir, le cas échéant, de supprimer les rayonnements ultraviolets auxquels la pellicule photosensible peut s'avérer être sensible.

Comme il ressort de la figure 2, le dispositif optique selon l'invention, désigné dans son ensemble par la référence numérique générale 6, est intégré dans le chemin optique d'un objectif photographique 8 placé devant la face d'entrée 10 d'un capteur optique 12 à semi-conducteurs. Ce capteur optique 12 équipe, par exemple, un appareil de prise d'images numérique non représenté sur les figures.

L'objectif photographique 8 comprend, outre le dispositif optique 6 selon l'invention, trois lentilles désignées successivement par les références 14, 16 et 18 depuis la face d'entrée 20 de l'objectif 8 située du côté de l'objet à photographier. Dans l'exemple représenté sur la figure 2, les trois lentilles 14, 16 et 18 sont des lentilles sphériques. Plus précisément, la lentille 14 est une lentille plan-convexe, la lentille 16 est une lentille biconcave, et la lentille 18 est une lentille biconvexe.

Les trois lentilles 14, 16 et 18 sont réalisées en verre, en plastique ou en tout autre matériau optique transparent. On comprendra, bien entendu, que la forme de réalisation de l'objectif photographique 8 susdécrite est donnée à titre purement illustratif et non limitatif, ledit objectif 8 pouvant comprendre une combinaison d'un nombre plus ou moins grand de lentilles sphériques et/ou asphériques selon la complexité de l'optique de cet objectif 8.

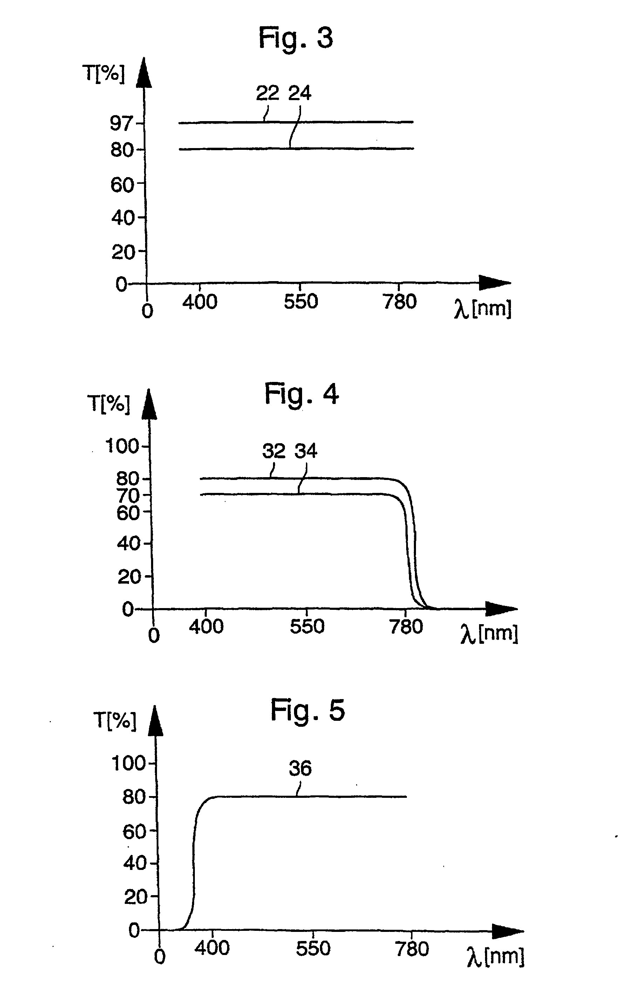

On s'intéresse maintenant au dispositif optique 6 selon l'invention. Selon une première caractéristique de l'invention, le dispositif optique 6 se présente sous la forme d'un bloc réalisé en un matériau homogène transparent filtrant. Au sens de l'invention, on comprend par matériau filtrant un matériau possédant un coefficient d'absorption qui est sensiblement le même pour l'ensemble des longueurs d'onde du spectre optique visible qui le traversent. Un tel matériau est encore appelé matériau filtrant neutre. Des exemples de matériaux filtrants neutres sont illustrés à la figure 3 qui représente le taux de transmission de la lumière T exprimé en pourcentages en fonction de la longueur d'onde optique λ exprimée en nanomètres qui traverse ledit matériau filtrant. La courbe 22 représente un matériau filtrant à 3%. Autrement dit, 97% de la lumière est transmise. La courbe 24 représente quant à elle un matériau filtrant à 20%, c'est-à-dire absorbant 20% de l'énergie lumineuse, et en laissant passer 80%. Comme on peut le constater sur la figure 3, les courbes 22 et 24 sont rectilignes horizontales, ce qui signifie que l'absorption est sensiblement uniforme pour l'ensemble du spectre optique visible traversant le matériau filtrant.

Ainsi, en choisissant une valeur du coefficient d'absorption adaptée et en faisant varier l'épaisseur du bloc de matériau filtrant en fonction de la distance à l'axe optique de l'objectif 8, on peut atteindre un profil d'absorption graduelle déterminé permettant d'obtenir un éclairement homogène dans le plan image de l'objectif équipé d'un tel bloc de matériau filtrant. A cet effet, et selon une autre caractéristique de l'invention, l'absorption dans une zone périphérique du bloc de matériau filtrant est inférieure à l'absorption dans une région centrale de ce même bloc. De la sorte, le bloc de matériau homogène transparent filtrant réduit l'éclairement au centre du plan image de l'objectif, tandis qu'il laisse passer davantage de lumière sur les bords dudit plan image.

Un avantage du dispositif optique 6 selon l'invention réside dans sa structure homogène. En effet, comme il a été décrit dans la partie introductive de la présente demande, les filtres de l'art antérieur ont en règle générale une structure hétérogène, présentant soit une couche mince rapportée à la surface d'un substrat dont l'épaisseur, variable du centre vers les bords dudit substrat, doit être contrôlée avec précision, soit une variation de la densité optique qu'il est toujours difficile de maîtriser convenablement. Au contraire, le dispositif 6 selon l'invention, grâce à sa structure monolithique, est très simple à usiner, et permet donc de réaliser des économies substantielles en termes de fabrication.

Conformément à une variante d'exécution préférée de l'invention, le dispositif optique 6 se présente sous la forme d'une lentille 26 plus épaisse en son centre que vers ses bords, de sorte qu'elle présente un profil d'absorption adapté permettant d'obtenir un éclairement homogène dans un plan image 28 de l'objectif 8. Comme représenté sur la figure 2, la lentille 26 est une lentille sphérique plan-convexe dont la courbure est adaptée à la distance focale de l'objectif 8. Lors du montage de l'objectif 8, on ne ferme hermétiquement que l'espace entre la lentille 26 et le capteur optique 12 afin de prévenir la pénétration de poussières. Cette opération d'encapsulation est facilitée par le fait que la face arrière 30 de la lentille 26 qui se trouve en regard de la face d'entrée 10 du capteur optique 12 est plane. L'objectif 8 est ainsi composé de quatre lentilles 14, 16, 18 et 26 qui sont agencées de telle manière que le plan image 28 dudit objectif 8 se trouve dans le plan photosensible du capteur optique 12.

Selon une autre caractéristique de l'invention, le bloc de matériau filtrant présente en outre un coefficient d'absorption de forte valeur pour des longueurs d'onde comprises dans une bande spectrale déterminée. Ainsi, grâce à la présente invention, on peut réunir en un même élément optique les fonctions de filtre à gradient d'absorption et de filtre spectral. Cette disposition particulièrement avantageuse de l'invention permet de limiter le prix de revient de l'objectif 8 en réduisant le nombre d'éléments nécessaires à son montage. Elle permet également de procurer un objectif 8 sensiblement moins encombrant et plus compact puisque seul le bloc de matériau filtrant doit être intégré dans le chemin optique dudit objectif 8. A titre d'exemple, les valeurs des distances entre les différents éléments optiques sont respectivement :
- 0,6 mm entre la lentille 14 et l'ouverture de diaphragme 21;
- 0,29 mm entre l'ouverture de diaphragme 21 et la lentille 16;
- 0,56 mm entre la lentille 16 et la lentille 18;
- 0.1 mm entre la lentille 18 et la lentille 26 selon l'invention.

En outre, le diamètre de l'objectif 8 est plus petit que la diagonale de la surface active du capteur optique 12. Une construction aussi compacte est rendue possible grâce à la présente invention qui permet de combiner trois éléments optiques distincts en un seul.

Dans le cas d'un appareil de prise d'images numérique, le bloc de matériau filtrant devra fortement absorber le rayonnement infrarouge auquel le capteur optique 12 à semi-conducteurs est très sensible. A cet effet, le bloc de matériau filtrant pourra, par exemple, être réalisé en un verre commercialisé par la société Schott sous la référence BG39. Le profil de transmission du spectre lumineux de ce matériau est représenté schématiquement à la figure 4. Les courbes 32 et 34 correspondent à deux épaisseurs différentes e₁ et e₂ de verre BG39 de l'ordre de 1 mm et 2 mm respectivement. Le taux de transmission T est d'environ 80% pour la courbe 32 et de 70% pour la courbe 34. On constate donc que l'absorption du verre BG39 est sensiblement constante dans le domaine du spectre optique visible et qu'elle croît fortement dans le domaine de l'infrarouge (forte diminution du taux de transmission T). On notera que l'épaisseur du bloc de matériau filtrant est suffisante pour éliminer par absorption toute lumière infrarouge perturbante.

Inversement, dans le cas d'un appareil photographique classique muni d'une pellicule photosensible, on choisira un matériau présentant un taux d'absorption sensiblement constant dans le domaine du spectre visible, et décroissant fortement dans le domaine de l'ultraviolet (voir courbe 36, figure 5).

La présente invention concerne également un objectif muni d'un dispositif optique 6 du genre susmentionné, ainsi qu'un appareil de prise d'images muni d'un tel objectif.

Il va de soi que diverses modifications et variantes simples entrent dans le cadre de la présente invention.

## Revendications

1. Dispositif optique destiné à homogénéiser l'éclairement dans un plan image, **caractérisé en ce qu'**il est formé d'un bloc réalisé en un matériau homogène transparent filtrant, ce bloc possédant un coefficient d'absorption sensiblement uniforme pour l'ensemble des longueurs d'onde du spectre optique visible qui le traversent, et présentant une épaisseur variable adaptée à un profil d'absorption déterminé, ce profil d'absorption permettant l'homogénéisation de l'éclairement dudit plan image.

2. Dispositif optique selon la revendication 1, **caractérisé en ce que** l'absorption dans une zone périphérique est inférieure à l'absorption dans une région centrale du bloc de matériau transparent filtrant.

3. Dispositif optique selon l'une quelconque des revendications 1 ou 2, **caractérisé en ce que** le bloc de matériau transparent filtrant constitue une lentille (26).

4. Dispositif optique selon la revendication 3, **caractérisé en ce que** la lentille (26) est sphérique.

5. Dispositif optique selon la revendication 4, **caractérisé en ce que** la lentille (26) est plan-convexe.

6. Dispositif optique selon l'une quelconque des revendications 1 à 5, **caractérisé en ce que** le bloc de matériau transparent filtrant présente en outre un coefficient d'absorption de forte valeur pour des longueurs d'onde comprises dans une bande spectrale déterminée.

7. Dispositif optique selon la revendication 6, **caractérisé en ce que** le bloc de matériau transparent filtrant absorbe fortement l'infrarouge. bloc de matériau transparent filtrant est réalisé en verre commercialisé par la

8. Dispositif optique selon la revendication 6, **caractérisé en ce que** le bloc de matériau transparent filtrant absorbe fortement l'ultraviolet.

9. Objectif photographique comprenant une pluralité de lentilles sphériques et/ou asphériques, **caractérisé en ce qu'**il comprend un dispositif optique selon l'une quelconque des revendications 1 à 8.

10. Objectif photographique selon la revendication 9, **caractérisé en ce que** les lentilles sphériques et/ou asphériques (14, 16, 18) et le dispositif optique (6) sont agencés de telle manière que le plan image (28) dudit objectif (6) se trouve dans le plan photosensible d'un capteur optique (10).

11. Appareil de prise d'images, **caractérisé en ce qu'**il comprend un objectif photographique selon l'une quelconque des revendications 9 ou 10.

## Patentansprüche

1. Optische Vorrichtung zum Homogenisieren der Illumination in einer Bildebene, **dadurch gekennzeichnet, daß** sie aus einem Block gebildet ist, der aus einem homogenen, transparenten, filtrierenden Material hergestellt ist, wobei dieser Block einen Absorptionskoeffizienten aufweist, der für die Gesamtheit der Wellenlängen des sichtbaren Spektrums, die ihn durchqueren, im wesentlichen gleichförmig ist, und eine sich ändernde Dicke aufweist, die an ein bestimmtes Absorptionsprofil angepaßt ist, wobei das Absorptionsprofil das Homogenisieren der Illumination der Bildebene ermöglicht.

2. Optische Vorrichtung nach Anspruch 1, **dadurch gekennzeichnet, daß** die Absorption in einer Randzone des Blocks aus transparentem, filtrierendem Material geringer ist, als die Absorption in einer Mittelzone.

3. Optische Vorrichtung nach Anspruch 1 oder 2, **dadurch gekennzeichnet, daß** der Block aus transparentem, filtrierendem Material eine Linse (26) bildet.

4. Optische Vorrichtung nach Anspruch 3, **dadurch gekennzeichnet, daß** die Linse (26) sphärisch ist.

5. Optische Vorrichtung nach Anspruch 4, **dadurch gekennzeichnet, daß** die Linse (26) plankonvex ist.

6. Optische Vorrichtung nach einem der Ansprüche 1 bis 5, **dadurch gekennzeichnet, daß** der Block aus transparentem, filtrierendem Material ferner einen Absorptionskoeffizienten höheren Werts für die Wellenlängen aufweist, die in einem vorgegebenen Spektralbereich enthalten sind.

7. Optische Vorrichtung nach Anspruch 6, **dadurch gekennzeichnet, daß** der Block aus transparentem, filtrierendem Material Infrarot stark absorbiert.

8. Optische Vorrichtung nach Anspruch 6, **dadurch gekennzeichnet, daß** der Block aus transparentem, filtrierendem Material Ultraviolett stark absorbiert.

9. Fotoobjektiv mit einer Vielzahl sphärischer und/oder asphärischer Linsen, **dadurch gekennzeichnet, daß** es eine optische Vorrichtung nach einem der Ansprüche 1 bis 8 umfaßt.

10. Fotoobjektiv nach Anspruch 9, **dadurch gekennzeichnet, daß** die sphärischen und/oder asphärischen Linsen (14, 16, 18) und die optische Vorrichtung (6) derart ausgestaltet sind, daß die Bildebene (28) des Objektivs (6) sich in der photosensitiven Ebene eines optischen Sensors (10) befindet.

11. Bildaufnahmevorrichtung, **dadurch gekennzeichnet, daß** sie ein Fotoobjektiv nach einem der Ansprüche 9 oder 10 umfaßt.

## Claims

1. Optical device intended for homogenising the lighting in an image plane, **characterised in that** it is formed of a block made of transparent homogenous filtering material, this block having a substantially uniform absorption coefficient for all the wavelengths of the visible optical spectrum which pass through it, and having a variable thickness suited to a determined absorption profile, this absorption profile enabling the homogenization of the lighting in said image plane.

2. Optical device according to claim 1, **characterised in that** the absorption in a peripheral zone is less than the absorption in a central region of the block of transparent filtering material.

3. Optical device according to any of claims 1 or 2, **characterised in that** the block of transparent filtering material forms a lens (26).

4. Optical device according to claim 3, **characterised in that** the lens (26) is spherical.

5. Optical device according to claim 4, **characterised in that** the lens (26) is plane-convex.

6. Optical device according to any of claims 1 to 5, **characterised in that** the block of transparent filtering material also has a high absorption coefficient value for wavelengths comprised within a determined spectral band.

7. Optical device according to claim 6, **characterised in that** the block of transparent filtering material absorbs infrared range strongly.

8. Optical device according to claim 6, **characterised in that** the block of transparent filtering material strongly absorbs ultraviolet range.

9. Photographic lens assembly including a plurality of spherical and/or aspherical lenses, **characterised in that** it includes an optical device according to any of claims 1 to 8.

10. Photographic lens assembly according to claim 9, **characterised in that** the spherical and/or aspherical lenses (14, 16, 18) and the optical device (6) are arranged so that the image plane (28) of said lens assembly (6) is in the photosensitive plane of an optical sensor (10).

11. Camera, **characterised in that** it includes a photographic lens assembly according to claims 9 or 10.
